(19) Europäisches Patentamt
European Patent Office
Office européen des brevets

(11) **EP 3 211 294 B1**

(12) **FASCICULE DE BREVET EUROPEEN**

(45) Date de publication et mention
de la délivrance du brevet:
**10.11.2021  Bulletin 2021/45**

(21) Numéro de dépôt: **17157076.5**

(22) Date de dépôt: **21.02.2017**

(51) Int Cl.:
*F21S 41/147* (2018.01)       *F21S 41/20* (2018.01)
*F21S 41/32* (2018.01)       *F21S 41/40* (2018.01)
*F21S 41/25* (2018.01)       *F21S 41/663* (2018.01)

(54) **MODULE ET DISPOSITIF D'ÉCLAIRAGE À ENCOMBREMENT RÉDUIT POUR VÉHICULE AUTOMOBILE**

BELEUCHTUNGSMODUL UND -VORRICHTUNG MIT GERINGEM PLATZBEDARF FÜR EIN KRAFTFAHRZEUG

LIGHTING DEVICE AND MODULE WITH REDUCED FOOTPRINT FOR MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.02.2016   FR 1651459**

(43) Date de publication de la demande:
**30.08.2017   Bulletin 2017/35**

(73) Titulaire: **Valeo Vision**
**93012 Bobigny Cedex (FR)**

(72) Inventeur: **GOUSSET-ROUSSEAU, Simon**
**94300 VINCENNES (FR)**

(74) Mandataire: **Valeo Visibility**
**Service Propriété Industrielle**
**c/o Valeo Vision**
**34, rue Saint André**
**93012 Bobigny (FR)**

(56) Documents cités:
WO-A1-2011/154470       DE-A1-102007 052 696
DE-A1-102011 013 211     DE-A1-102014 205 994

**Description**

Arrière-plan de l'invention

La présente invention est relative à un module et un dispositif d'émission d'un faisceau lumineux et à un projecteur associé. Une application préférée de l'invention concerne l'industrie automobile pour la réalisation de dispositifs d'éclairage, notamment de projecteurs de véhicules.

Il est connu des modules d'émission d'un faisceau lumineux avec un profil de coupure, notamment pour des véhicules automobiles. Il est en particulier connu des modules comprenant deux collecteurs optiques adaptés à collecter la lumière émise par des sources lumineuses et à rediriger la lumière collectée vers une région focale où se trouve un élément de coupure configuré pour générer le profil de coupure du faisceau lumineux à projeter au moyen d'une lentille.

Dans les modules connus de l'Homme du Métier, les sources lumineuses et collecteurs associés sont orientés en direction de l'élément de coupure aligné selon l'axe optique du dispositif, comme décrit dans le document de brevet FR2934667. Les documents de brevet DE 10 2011 013211 A1 et DE 10 2014 205994 A1 montrent des autres modules connus.

Une telle configuration est désavantageuse dans la mesure où celle-ci ne permet pas d'améliorer la compacité de l'ensemble du dispositif. En effet, l'encombrement des collecteurs et la présence de l'élément de coupure entre les deux collecteurs limitent le rapprochement des sources optiques, l'une par rapport à l'autre. Au-delà d'un certain rapprochement, l'extrémité des collecteurs orientés en direction de l'élément de coupure entre en collision avec l'élément de coupure.

Ceci est particulièrement désavantageux pour la réalisation de systèmes à faible ouverture avec l'utilisation d'une lentille fine dans lesquels le collimateur doit être rapproché le plus possible du plan comprenant l'élément de coupure.

Plusieurs contraintes d'encombrement liées au collecteur limitent également la possibilité de rendre plus compacts les systèmes d'éclairage pour véhicules automobiles existant.

Premièrement, le collecteur doit avoir une dimension suffisante pour collecter un flux lumineux maximum issu de la source lumineuse.

Deuxièmement, le tirage du collecteur destiné à rediriger la lumière vers une région focale doit être plus grand que la dimension de la surface de la source lumineuse pour permettre une focalisation correcte dans la région focale.

Troisièmement, la surface d'entrée du collecteur doit être suffisamment éloignée de la source lumineuse en raison de contraintes thermiques.

La présente invention permet de pallier les inconvénients des dispositifs connus de l'art antérieur en tenant compte des contraintes énoncées ci-dessus, selon une approche ingénieuse qui va à l'encontre des solutions classiques et qui consiste à orienter au moins une des sources lumineuses et le collecteur associé à cette source, dans une direction s'écartant de l'axe optique du dispositif et en particulier s'écartant de l'élément de coupure, plutôt que dans une direction pointant vers cet élément. Compte-tenu de l'orientation singulière de la source et du collecteur associé, ce dernier est adapté de telle sorte qu'il redirige les rayons issus de la source lumineuse vers une région focale.

Ainsi, la présente invention vise un module d'émission d'un faisceau lumineux suivant un axe optique, notamment pour véhicule automobile. Ce dispositif comprend au moins une première et au moins une deuxième sources lumineuses ainsi que des au moins un premier et au moins un deuxième collecteurs optiques adaptés à collecter la lumière émise par lesdites au moins une première et au moins une deuxième sources lumineuses respectivement et à rediriger la lumière collectée selon des directions convergentes. Avantageusement, le faisceau est un faisceau à coupure.

Selon le principe de l'invention, l'une au moins de ladite au moins une première et ladite au moins une deuxième sources lumineuses est orientée, de manière à émettre de la lumière selon une direction globale d'émission s'écartant de l'axe optique, le collecteur associé à ladite ou auxdites sources lumineuses orientées, présente au moins partiellement une configuration asymétrique allongeant le collecteur le long de l'axe optique. La direction globale d'émission des sources lumineuses forme avec l'axe optique un angle d'émission $\alpha_e$ compris entre 5° et 15°. Lesdits au moins un premier et au moins un deuxième collecteurs sont adaptés pour rediriger la lumière sur une même région focale. Lesdits au moins un premier et/ou au moins un deuxième collecteurs comprennent une surface de sortie formant un dioptre, ladite surface étant configurée pour focaliser la lumière collimatée vers ladite région focale.

L'invention permet de la sorte un rapprochement des deux sources lumineuses, l'une par rapport à l'autre, et par suite, de réduire l'encombrement du dispositif dans sa dimension verticale (c'est-à-dire dans une direction perpendiculaire à son axe optique).

D'autres caractéristiques, optionnelles et non limitatives, sont énoncées ci-après, étant noté qu'elles peuvent être mises en œuvre séparément ou selon toutes combinaisons entre elles.

- Lesdits au moins un premier et au moins un deuxième collecteurs sont adaptés pour rediriger la lumière sur au moins une région focale.
- Le et/ou les collecteurs comprennent une portion de collecte orientée selon la direction globale d'émission de la source lumineuse associée, de manière à collecter et collimater la lumière issue de la source lumineuse.

- Le et/ou les collecteurs sont adaptés pour collimater des rayons lumineux issus de la source lumineuse selon une direction formant un angle de collimation $\alpha_c$ non nul par rapport à l'axe optique.
- La surface de sortie est inclinée selon une direction d'inclinaison formant avec l'axe optique du collecteur un angle d'inclinaison $\alpha_s$ compris entre 5° et 20°.
- Le module comprend en outre un élément de coupure, configuré pour donner au faisceau un profil de coupure.
- L'élément de coupure est réfléchissant.
- L'élément de coupure est disposé le long de l'axe optique entre lesdits au moins un premier et au moins un deuxième collecteurs.
- Ladite au moins une première source lumineuse et ledit au moins un premier collecteur sont destinés à fournir un premier faisceau à coupure pour un éclairage de type code.
- Ladite au moins une deuxième source lumineuse et ledit au moins un deuxième collecteur sont destinés à compléter le premier faisceau de manière à obtenir un deuxième faisceau pour un éclairage de type route.
- L'une au moins desdites au moins une première et au moins une deuxième sources lumineuses comprend une diode électroluminescente.
- Les sources de lumière et les collecteurs sont disposés de façon symétrique par rapport à l'axe optique.
- Le module comprend une pluralité de première et deuxième sources lumineuses et une pluralité de premiers et deuxièmes collecteurs associés respectivement aux première et deuxième sources lumineuses, et dans lequel les premiers collecteurs sont en continuité de matière et/ou les deuxièmes collecteurs sont en continuité de matière, les uns avec les autres, respectivement.
- Le module comprend en outre une lentille de projection qui pourra être configurée pour être commune à la pluralité de premier et deuxième collecteurs.

Un autre aspect des modes de réalisation de l'invention porte sur un dispositif d'émission destiné à un système d'éclairage d'un véhicule automobile, le dispositif d'émission comprenant au moins un module d'émission selon l'invention selon l'une ou plusieurs des caractéristiques décrites ci-avant. Selon une particularité de l'invention, le dispositif est un projecteur avant de véhicule automobile.

Un autre objet de l'invention est un véhicule automobile équipé d'au moins un dispositif d'émission selon l'invention, ledit dispositif comprenant au moins module d'émission, tel que décrit ci-dessus.

Brève description des dessins

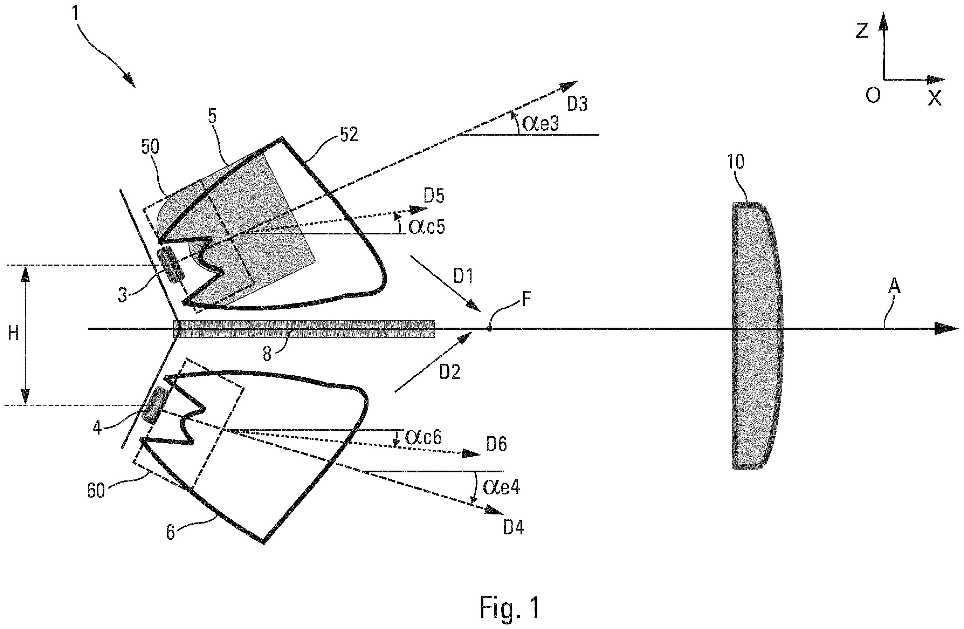

D'autres caractéristiques, détails et avantages de l'invention ressortiront à la lecture de la description faite en référence au dessin annexé, donné à titre d'exemple et qui représente de façon schématique sur la **figure 1,** un module d'éclairage pour véhicule automobile selon un mode particulier de réalisation de l'invention.

Le terme « parallèle » ou la notion d'axes confondus s'entend ici notamment avec les tolérances de fabrication ou de montage : des directions sensiblement parallèles ou des axes sensiblement confondus entre dans ce cadre.

Description détaillée d'un mode de réalisation

La **figure 1** est une représentation en coupe d'un module d'éclairage ou d'émission d'au moins un faisceau lumineux pour véhicule automobile selon un mode particulier de réalisation de l'invention. Dans cette représentation, la coupe est réalisée suivant un plan vertical (O, X, Z) d'un repère local orthonormé {O, X, Y, Z} où l'axe O-X indique une direction horizontale, parallèle à l'axe optique A du module, tandis que l'axe O-Z désigne une direction verticale perpendiculaire à l'axe O-X.

Le module d'émission illustré à la figure 1 est destiné à produire deux faisceaux lumineux pour la mise en œuvre de deux modes d'éclairage distincts :

(i) un éclairage présentant un profil de coupure pour éviter d'éblouir les véhicules circulant en sens inverse (correspondant à un mode d'éclairage de type « codes »), et (ii) un éclairage sans profil de coupure (correspondant à un mode d'éclairage de type « plein phares » ou « feux de route »).

Le module d'émission 1 comprend un premier ensemble constitué d'une première source lumineuse 3 et d'un premier collecteur optique 5, le premier ensemble optique étant destiné à fournir un premier faisceau lumineux.

Le module d'émission 1 comprend en outre un deuxième ensemble constitué d'une deuxième source lumineuse 4 et d'un deuxième collecteur optique 6, le deuxième ensemble optique étant destiné à fournir un deuxième faisceau lumineux.

Une lentille convergente 10 est disposée le long de l'axe optique A, de manière à projeter les faisceaux optiques issus des collecteurs et réaliser l'un des deux modes d'éclairage prévus en fonction de l'allumage de l'une ou des deux sources lumineuses 3, 4.

Un élément de coupure 8 est disposé entre les premier et deuxième ensembles, le long de l'axe optique A du projecteur, pour réaliser le profil de coupure voulu.

Les coupures produites par l'élément de coupure 8 peuvent avoir toute orientation dans l'espace. Le profil de coupure s'entend préférentiellement de la formation d'un faisceau de sortie non uniformément réparti autour de l'axe optique du fait de la présence d'une zone de moindre exposition lumineuse, cette zone étant sensiblement délimitée par un profil de coupure qui peut être formé par au moins deux, et notamment trois segments de droite formant un angle entre eux ou avoir une forme plus complexe en virage telles que les coupures connues sous le vocable anglais « kink ». L'éclairage résultant est dit de type « feux de codes ».

L'élément de coupure 8 est réfléchissant. Il est constitué, par exemple, par une plaque métallique dénommée plieuse (*folder* en anglais).

Autrement dit, la première source lumineuse 3 et le premier collecteur 5 sont destinés à fournir un premier faisceau à coupure pour un éclairage de type code, tandis que la deuxième source lumineuse 4 et le deuxième collecteur 6 sont destinés à compléter le premier faisceau pour obtenir un deuxième faisceau pour réaliser un éclairage de type route.

Dans l'exemple présent, chaque source lumineuse 3, 4 est constituée d'une diode électroluminescente. Toutefois, dans d'autres modes de réalisation, plusieurs éléments d'émission pourront être combinés pour former l'une quelconque des premières et deuxièmes sources lumineuses, de manière à émettre un flux lumineux de puissance optique plus élevée en sortie du projecteur. Chaque élément d'émission pourra être constitué, par exemple, par une diode électroluminescente ou une diode laser.

Les premier 5 et deuxième 6 collecteurs sont adaptés pour collecter la lumière émise par les première 3 et deuxième 4 sources lumineuses respectivement, collimater et rediriger la lumière collectée selon des première D1 et deuxième D2 directions qui convergent vers l'axe optique A.

Pour cela, ici, le premier collecteur 5 comprend une portion de collecte 50, configurée pour collecter la lumière issue de la première source lumineuse 3. De même, le deuxième collecteur 6 comprend une portion de collecte 60, configurée pour collecter la lumière issue de la deuxième source lumineuse 4.

Chaque collecteur est adapté à guider la lumière collectée et à la collimater selon une direction de collimation formant avec l'axe optique A un angle de collimation $\alpha_c$, dont la valeur absolue est non nulle et comprise, de préférence, entre 0° et 15°.

Dans des variantes de réalisation, la valeur de cet angle de collimation pourra être adaptée à chaque collecteur respectivement, de sorte que la direction de collimation D5 du premier collecteur 5 et la direction de collimation D6 du deuxième collecteur 6 forme respectivement un premier angle de collimation $\alpha_{c5}$ et un deuxième angle de collimation $\alpha_{c6}$ avec l'axe optique A.

La lumière collectée est guidée à l'intérieur du collecteur et collimatée après réflexion sur le dioptre formé par les parois latérales du collecteur et l'air ambiant.

Chacun des premier 5 et deuxième 6 collecteurs optiques peut comprendre un matériau transparent d'indice de réfraction supérieur ou égal à 1,41 présentant des propriétés adaptées pour la propagation de la lumière, tel que du PMMA (polyméthacrylate de méthyle) ou du polycarbonate PPC (carbonate polypropylène).

Selon l'invention, les première 3 et deuxième 4 sources lumineuses sont orientées, de manière à émettre de la lumière selon des première D3 et deuxième D4 directions globales d'émission respectivement. Ces directions s'écartent de l'axe optique A dans le sens de propagation de la lumière (vers la lentille 10) et forment chacune avec l'axe optique A un angle d'émission $\alpha_{e3}$ et $\alpha_{e4}$ respectivement, dont la valeur absolue est comprise entre 5° et 15°.

Cette orientation permet de minimiser l'écartement H séparant verticalement les première 3 et deuxième 4 sources lumineuses. Ceci est particulièrement avantageux pour réduire l'encombrement vertical du module par rapport aux solutions classiques de l'art antérieur où les sources sont orientées de manière à émettre la lumière en direction de l'axe optique A et pour éviter des pertes significatives qui peuvent apparaître avec des angles supérieurs à 15°.

Le premier collecteur 5 associé à la première source lumineuse 3 est orienté sensiblement selon la première direction globale d'émission D3 formant un premier angle d'émission $\alpha_{e3}$ avec l'axe optique A, de manière à collecter le maximum de lumière issue de la première source lumineuse 3. De même, le deuxième collecteur 6 associé à la deuxième source lumineuse 4 est orienté sensiblement selon la deuxième direction globale d'émission D4 formant un deuxième angle d'émission $\alpha_{e4}$ avec l'axe optique A, de manière à collecter le maximum de lumière issue de la deuxième source lumineuse 4.

Dans l'exemple de réalisation décrit ici, les deux sources lumineuses et collecteurs associés sont orientés de manière symétrique par rapport à l'axe optique A, de sorte que les premier et deuxième angles d'émission ont une même valeur ($\alpha_{e3} = \alpha_{e4}$) que l'on désignera par la suite par $\alpha_e$, cette valeur étant de préférence comprise entre 5° et 15°.

Toutefois, dans des variantes de réalisation, les deux sources lumineuses et collecteurs associés pourront être orientés selon des angles $\alpha_{e3}$ et $\alpha_{e4}$ de valeurs distinctes, la valeur de ces angles pouvant être ajustée en fonction des propriétés optiques et de la configuration géométrique propres à chaque collecteur.

Selon une particularité de l'invention, les premier 5 et deuxième 6 collecteurs présentent, au moins partiellement, une configuration asymétrique allongeant le collecteur 5, 6 le long de l'axe optique A. Comme illustré à titre d'exemple sur la figure 1, chacun des deux collecteurs présente un étirement asymétrique en direction d'une région focale et plus particulièrement d'un point focal F de la lentille, sur la partie du collecteur la plus proche de l'axe optique, de manière à focaliser la lumière vers l'axe optique A, préférentiellement sur le point focal F.

Pour mieux apprécier le caractère asymétrique de la forme du collecteur, une zone grisée représentant une forme symétrique a été superposée au premier collecteur 5 sur la figure 1.

La forme asymétrique du collecteur est prévue pour rediriger la lumière sur un même point focal F situé le long de l'axe optique A, à proximité d'une extrémité de l'élément de coupure 8. Les premier et deuxième collecteurs sont adaptés pour rediriger la lumière sur ce même point focal F, notamment en fonction des valeurs de l'angle d'émission $\alpha_e$ et de l'angle de collimation $\alpha_c$.

On notera que plus la valeur de l'angle de collimation $\alpha_c$ est élevée, dans une limite supérieure fixée de préférence à 15°, plus la dissymétrie du collimateur est forte, de manière à rediriger la lumière vers le foyer F de la lentille de projection 10.

Une telle dissymétrie s'accompagne de pertes de Fresnel par réflexion interne sur le dioptre formé par le collimateur et l'air (milieu ambiant). Ces pertes sont d'autant plus élevées que la dissymétrie est forte. Par conséquent, on veillera à optimiser le degré de dissymétrie du collecteur, de manière à limiter l'atténuation du faisceau lumineux issu du collecteur.

Le choix de la valeur de l'angle d'émission $\alpha_e$ et de la valeur de l'angle de collimation $\alpha_c$ est un compromis entre les points suivants.

Premièrement, l'angle d'émission $\alpha_e$ et l'angle de collimation $\alpha_c$ ont des valeurs comprises, de préférence, entre 5° et 15°, et entre 0° et 15° respectivement, de sorte que la direction globale d'émission et la direction de collimation ne soient ni parallèles à l'axe optique A ni dirigées vers l'élément de coupure 8 dans le sens de la propagation de la lumière. Dans le cas où ces valeurs sont distinctes, on notera que plus l'angle d'émission $\alpha_e$ a une valeur proche de celle de l'angle de collimation $\alpha_c$, plus les portions de collecte 50, 60 des collecteurs ont pour effet de collecter la lumière.

Dans le cas limite où l'angle d'émission $\alpha_e$ a une valeur égale à celle de l'angle de collimation $\alpha_c$, la direction d'émission globale de la source lumineuse est confondue avec la direction de collimation du collimateur associé à la source lumineuse.

Plus la valeur de l'angle de collimation $\alpha_c$ est faible, plus la direction de collimation tend à être parallèle à l'axe optique A. Par conséquent, moins de lumière sera collectée par la zone de collecte du collecteur et plus le collecteur sera susceptible de rentrer en collision avec l'élément de coupure 8.

Dans un mode de réalisation particulier, donné à titre illustratif et non limitatif, les sources lumineuses sont inclinées par rapport à l'axe optique A, de sorte que la valeur de l'angle d'émission globale des sources lumineuse $\alpha_e$ est égale à 5°. Les collecteurs sont orientés et conçus de sorte que la valeur de l'angle de collimation $\alpha_c$ soit non nulle mais proche de 0°, par exemple, égale à 1°. Ainsi, chaque collecteur commence à rabattre la lumière en rapprochant les rayons lumineux vers l'axe optique, tout en évitant au collimateur d'entrer en collision avec l'élément de coupure 8. La géométrie asymétrique du collecteur est prévue en conséquence pour achever la redirection de la lumière vers le foyer F de la lentille 10.

Chacun des premier et deuxième collecteurs comprend une surface de sortie 52 formant un dioptre avec l'air ambiant, ladite surface étant configurée pour rediriger la lumière collimatée vers la région focale et plus particulièrement la focaliser sur le point focal F de la lentille de projection 10. La traversée de ce dioptre permet à la lumière collimatée de sortir du collecteur de manière globalement focalisée.

La géométrie de la surface de sortie 52 du collecteur est déterminée en fonction des directions d'émission globale de sources lumineuses, de manière à rabattre les rayons lumineux issus du collecteur vers un bord de la plieuse 8 dans la région focale et plus particulièrement sur le même point focal F.

Plus précisément, la surface de sortie 52 est inclinée selon une direction pointant vers l'axe optique A, dans le sens de propagation de la lumière, de sorte que l'angle de sortie $\alpha_s$ formé entre la tangente à la surface de sortie et la perpendiculaire à la direction de collimation est égal à :

$$Arcsin\left(\frac{n_{air}.D_h}{n.D}\right)$$

où $n_{air}$ désigne l'indice de réfraction de l'air, n désigne l'indice de réfraction du matériau transparent constituant le collimateur, $D_h$ désigne la hauteur entre le point de tangence à la surface de sortie et le plan comprenant l'élément de coupure et D désigne la distance entre le point de tangence et le point focal F. L'angle de sortie $\alpha_s$ est compris, de préférence, entre 5° et 20°.

Une réduction de l'encombrement est obtenue de manière avantageuse, dès lors que la valeur de l'angle de collimation $\alpha_c$ est supérieure à 0°. Lorsque la valeur de cet angle dépasse 5°, les pertes de Fresnel générées par l'inclinaison de la surface de sortie 52 nécessaire pour rabattre les rayons vers la région focale, deviennent prépondérantes.

Dans un mode de réalisation particulier (non représenté), le module selon l'invention comprend une pluralité de premières et deuxièmes sources lumineuses associées respectivement à des premiers et deuxièmes collecteurs et une unique lentille de projection commune à l'ensemble des premiers et deuxièmes collecteurs éclairant à travers la lentille.

De manière avantageuse, les premiers et deuxièmes collecteurs sont en continuité de matière de part et d'autre de l'axe optique A, de manière à former une structure mono-bloc, de chaque côté de l'élément de coupure 8.

## Revendications

1. Module d'émission (1) d'au moins un faisceau lumineux suivant un axe optique (A) pour véhicule automobile, ledit dispositif comprenant au moins une première (3) et au moins une deuxième (4) sources lumineuses, des au moins un premier (5) et au moins un deuxième (6) collecteurs optiques adaptés pour collecter la lumière émise par ladite au moins une première et ladite au moins une deuxième sources lumineuses respectivement et pour rediriger la lumière collectée selon des directions convergentes (D5, D6) ; où :

   • l'une au moins de ladite au moins une première et ladite au moins une deuxième sources lumineuses est orientée, de manière à émettre de la lumière selon une direction globale d'émission (D3, D4) s'écartant de l'axe optique (A); et
   • le collecteur associé à la ou auxdites sources lumineuses orientées présente au moins partiellement une configuration asymétrique allongeant le collecteur le long de l'axe optique (A),

   le module étant **caractérisé en ce que** :

   - ladite direction globale d'émission (D3, D4) forme avec l'axe optique (A) un angle d'émission ($\alpha_{e3}$, $\alpha_{e4}$ $\alpha_e$) compris entre 5° et 15° ;
   - lesdits au moins un premier et au moins un deuxième collecteurs sont adaptés pour rediriger la lumière sur une même région focale ;
   - lesdits au moins un premier et/ou au moins un deuxième collecteurs comprennent une surface de sortie (52) formant un dioptre, ladite surface étant configurée pour focaliser la lumière collimatée vers ladite région focale..

2. Module selon la revendication 1, dans lequel le et/ou les collecteurs comprennent une portion de collecte (50, 60) orientée selon la direction globale d'émission (D3, D4) de la source lumineuse associée, de manière à collecter et collimater la lumière issue de ladite source lumineuse.

3. Module selon la revendication 2, dans lequel le et/ou les collecteurs (5, 6) sont adaptés pour collimater des rayons lumineux issus de ladite source (3, 4) selon une direction (D5, D6) formant un angle de collimation ($\alpha_{c5}$, $\alpha_{e6}$; $\alpha_c$) non nul par rapport à l'axe optique (A).

4. Module selon l'une des revendications 1 à 3, dans lequel ladite surface de sortie (52) est inclinée selon une direction d'inclinaison formant avec l'axe optique du collecteur un angle d'inclinaison ($\alpha_s$) compris entre 5° et 20°.

5. Module selon l'une quelconque des revendications 1 à 4, comprenant en outre un élément de coupure (8), configuré pour donner au faisceau un profil de coupure.

6. Module selon la revendication 5, dans lequel ledit élément de coupure (8) est réfléchissant.

7. Module selon l'une quelconque de revendications 5 et 6, dans lequel ledit élément de coupure (8) est disposé le long de l'axe optique (A) entre lesdits au moins un premier (5) et au moins un deuxième (6) collecteurs.

8. Module selon l'une quelconque des revendications 5 à 7, dans lequel :

   • ladite au moins une première source lumineuse (3) et ledit au moins un premier collecteur (5) sont destinés à fournir un premier faisceau à coupure pour un éclairage de type code, et
   • ladite au moins une deuxième source lumineuse (4) et ledit au moins un deuxième collecteur (6) sont destinés à compléter le premier faisceau de manière à obtenir un deuxième faisceau pour un éclairage de type route.

9. Module selon l'une quelconque des revendications 1 à 8, dans lequel l'une au moins desdites au moins une première (3) et au moins une deuxième (4) sources lumineuses comprend une diode électroluminescente.

10. Module selon l'une quelconque des revendications 1 à 8, dans lequel lesdites sources de lumière (3, 4) et lesdits collecteurs (5, 6) sont disposés de façon symétrique par rapport à l'axe optique (A).

11. Module d'émission selon l'une quelconque des revendications 1 à 10, comprenant une pluralité de première et deuxième sources lumineuses et une pluralité de premiers et deuxièmes collecteurs associés respectivement aux première et deuxième sources lumineuses, et dans lequel les premiers collecteurs sont en continuité de matière et/ou les deuxièmes collecteurs sont en continuité de matière, les uns avec les autres, respectivement.

12. Module d'émission selon la revendication 11, comprenant en outre une lentille de projection (10) commune à ladite pluralité de premiers et deuxièmes collecteurs.

13. Dispositif d'émission comprenant au moins un module d'émission selon l'une quelconque des revendications 1 à 12.

14. Dispositif d'émission selon la revendication 13, **ca-**

ractérisé en ce que ledit dispositif est un projecteur avant de véhicule automobile.

## Patentansprüche

1. Emissionsmodul (1) mindestens eines Lichtbündels gemäß einer optischen Achse (A) für ein Kraftfahrzeug, wobei die Vorrichtung mindestens eine erste (3) und mindestens eine zweite (4) Lichtquelle, mindestens einen ersten (5) und mindestens einen zweiten (6) optischen Kollektor enthält, die geeignet sind, das von der mindestens einen ersten bzw. der mindestens einen zweiten Lichtquelle emittierte Licht zu sammeln und das gesammelte Licht gemäß konvergierenden Richtungen umzuleiten (D5, D6); wobei:

    • mindestens eine der mindestens einen ersten und mindestens einen zweiten Lichtquellen ausgerichtet ist, um Licht gemäß einer globalen Emissionsrichtung (D3, D4) zu emittieren, die sich von der optischen Achse (A) entfernt; und
    • der der oder den ausgerichteten Lichtquellen zugeordnete Kollektor mindestens teilweise eine unsymmetrische Konfiguration aufweist, die den Kollektor entlang der optischen Achse (A) verlängert,

    wobei das Modul **dadurch gekennzeichnet ist, dass**:

    - die globale Emissionsrichtung (D3, D4) mit der optischen Achse (A) einen Emissionswinkel ($\alpha_{e3}$, $\alpha_{e4}$, $\alpha_e$) zwischen 5° und 15° bildet;
    - die mindestens ein erster und mindestens ein zweiter Kollektoren geeignet sind, das Licht auf einen gleichen Fokalbereich umzuleiten;
    - die mindestens ein erster und/oder mindestens ein zweiter Kollektoren eine einen Diopter bildende Ausgangsfläche (52) enthalten, wobei die Fläche konfiguriert ist, das kollimierte Licht zum Fokalbereich zu fokussieren.

2. Modul nach Anspruch 1, wobei der und/oder die Kollektoren einen Sammelabschnitt (50, 60) enthalten, der gemäß der globalen Emissionsrichtung (D3, D4) der zugeordneten Lichtquelle ausgerichtet ist, um das von der Lichtquelle stammende Licht zu sammeln und zu kollimieren.

3. Modul nach Anspruch 2, wobei der und/oder die Kollektoren (5, 6) geeignet sind, von der Quelle (3, 4) stammende Lichtstrahlen gemäß einer Richtung (D5, D6) zu kollimieren, die einen Kollimationswinkel ($\alpha_{c5}$, $\alpha_{c6}$; $\alpha_c$) ungleich Null bezüglich der optischen Achse (A) bildet.

4. Modul nach einem der Ansprüche 1 bis 3, wobei die Ausgangsfläche (52) gemäß einer Neigungsrichtung geneigt ist, die mit der optischen Achse des Kollektors einen Neigungswinkel ($\alpha_s$) zwischen 5° und 20° bildet.

5. Modul nach einem der Ansprüche 1 bis 4, das außerdem ein Hell-Dunkel-Grenze-Element (8) enthält, das konfiguriert ist, dem Bündel ein Hell-Dunkel-Profil zu verleihen.

6. Modul nach Anspruch 5, wobei das Hell-Dunkel-Grenze-Element (8) reflektierend ist.

7. Modul nach einem der Ansprüche 5 und 6, wobei das Hell-Dunkel-Grenze-Element (8) entlang der optischen Achse (A) zwischen den mindestens einen ersten (5) und mindestens einen zweiten (6) Kollektoren angeordnet ist.

8. Modul nach einem der Ansprüche 5 bis 7, wobei:

    • die mindestens eine erste Lichtquelle (3) und der mindestens eine erste Kollektor (5) dazu bestimmt sind, ein erstes Bündel mit Hell-Dunkel-Grenze für eine Beleuchtung der Art Abblendlicht zu liefern, und
    • die mindestens eine zweite Lichtquelle (4) und der mindestens eine zweite Kollektor (6) dazu bestimmt sind, das erste Bündel zu vervollständigen, um ein zweites Bündel für eine Beleuchtung der Art Fernlicht zu erhalten.

9. Modul nach einem der Ansprüche 1 bis 8, wobei mindestens eine der mindestens einen ersten (3) und mindestens einen zweiten (4) Lichtquellen eine Elektrolumineszenzdiode enthält.

10. Modul nach einem der Ansprüche 1 bis 8, wobei die Lichtquellen (3, 4) und die Kollektoren (5, 6) bezüglich der optischen Achse (A) symmetrisch angeordnet sind.

11. Emissionsmodul nach einem der Ansprüche 1 bis 10, das eine Vielzahl erster und zweiter Lichtquellen und eine Vielzahl erster und zweiter Kollektoren enthält, die den ersten bzw. zweiten Lichtquellen zugeordnet sind, und wobei die ersten Kollektoren in Materialkontinuität sind und/oder die zweiten Kollektoren jeweils miteinander in Materialkontinuität sind.

12. Emissionsmodul nach Anspruch 11, das außerdem eine Projektionslinse (10) enthält, die der Vielzahl erster und zweiter Kollektoren gemeinsam ist.

13. Emissionsvorrichtung, die mindestens ein Emissionsmodul nach einem der Ansprüche 1 bis 12 enthält.

**14.** Emissionsvorrichtung nach Anspruch 13, **dadurch gekennzeichnet, dass** die Vorrichtung ein Frontscheinwerfer eines Kraftfahrzeugs ist.

**Claims**

**1.** Module (1) for emitting at least one light beam along an optical axis (A) for automobile vehicles, said device comprising at least a first (3) and at least a second (4) light sources, at least a first (5) and at least a second (6) optical collectors designed to collect the light emitted by said at least a first and said at least a second light sources, respectively, and to redirect the light collected in convergent directions (D5, D6); where:

• at least one of said at least a first and said at least a second light sources is oriented, in such a manner as to emit light in an overall direction of emission (D3, D4) moving away from the optical axis (A); and
• the collector associated with the or with said oriented light sources have, at least partially, an asymmetrical configuration elongating the collector along the optical axis (A),

the module being **characterized in that**:

- said overall direction of emission (D3, D4) forms an angle of emission ($\alpha_{e3}$, $\alpha_{e4}$; $\alpha_e$) with the optical axis (A) in the range between 5° and 15°;
- said at least a first and at least a second collectors are adapted for redirecting the light onto the same focal region; and
- said at least a first and/or at least a second collectors comprise an exit surface (52) forming an optical interface, said surface being configured for focusing the collimated light toward said focal region.

**2.** Module according to claim 1, in which the collector and/or collectors comprise a collection portion (50, 60) oriented in the overall direction of emission (D3, D4) of the associated light source, in such a manner as to collect and to collimate the light coming from said light source.

**3.** Module according to Claim 2, in which the collector and/or collectors (5, 6) are designed to collimate light rays coming from said source (3, 4) in a direction (D5, D6) forming a non-zero collimation angle ($\alpha_{c5}$, $\alpha_{c6}$; $\alpha_c$) with respect to the optical axis (A).

**4.** Module according to any one of claims 1 to 3, in which said exit surface (52) is inclined in a direction of inclination forming an angle of inclination ($\alpha_s$) with

the optical axis of the collector in the range between 5° and 20°.

**5.** Module according to any one of Claims 1 to 4, furthermore comprising a cut-off element (8) configured in order to give a cut-off profile to the beam.

**6.** Module according to Claim 5, in which said cut-off element (8) is reflecting.

**7.** Module according to either one of Claims 5 or 6, in which said cut-off element (8) is disposed along the optical axis (A) between said at least a first (5) and at least a second (6) collectors.

**8.** Module according to any one of Claims 5 to 7, in which:

• said at least a first light source (3) and said at least a first collector (5) are designed to supply a first beam with a cut-off profile for an illumination of the low-beam type, and
• said at least a second light source (4) and said at least a second collector (6) are intended to complete the first beam in such a manner as to obtain a second beam for an illumination of the high-beam type.

**9.** Module according to any one of Claims 1 to 8, in which at least one of said at least a first (3) and at least a second (4) light sources comprises a light-emitting diode.

**10.** Module according to any one of Claims 1 to 8, in which said sources of light (3, 4) and said collectors (5, 6) are disposed symmetrically with respect to the optical axis (A).

**11.** Emission module according to any one of Claims 1 to 10, comprising a plurality of first and second light sources and a plurality of first and second collectors associated respectively with the first and second light sources, and in which the first collectors are formed as a single element and/or the second collectors are formed as a single element with one another, respectively.

**12.** Emission module according to Claim 11, furthermore comprising a projection lens (10) common to said plurality of first and second collectors.

**13.** Emission device comprising at least one emission module according to any one of Claims 1 to 12.

**14.** Emission device according to Claim 13, **characterized in that** said device is a front headlamp of an automobile vehicle.

Fig. 1

EP 3 211 294 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2934667
- DE 102011013211 A1
- DE 102014205994 A1